# EUROPEAN PATENT SPECIFICATION

(11) **EP 2 210 716 B1**
(45) Date of publication and mention of the grant of the patent: **25.01.2017**
(21) Application number: 09179625.0
(22) Date of filing: 17.12.2009
(51) Int. Cl.: B25J 9/16, G05B 19/423

(54) **Trainable robot and method of training**
Lernender Roboter und Lernverfahren
Robot pouvant être entraîné et procédé d'entraînement

(30) Priority: 23.01.2009 US 359249
(43) Date of publication of application: 28.07.2010
(73) Proprietor: Agilent Technologies, Inc., Santa Clara CA 95051 (US)
(72) Inventor: Wagner, Jon, Belmont, CA 94002 (US); Young, Derek, Santa Clara, CA 95051 (US)
(74) Representative: Dilg, Haeusler, Schindelmann Patentanwaltsgesellschaft mbH

(56) References cited:
- EP-A1- 0 788 865
- EP-A2- 1 304 604
- WO-A1-2005/015334
- US-A- 5 091 683
- US-B1- 6 222 338

## Description

### Background

Robots are used to perform many repetitive tasks in research and manufacturing. Once class of robot known as a pick-and-place robot is configured to pick up a payload at an origin location, to move the payload to a destination location and to deposit the payload at the destination location.

A robot is typically composed of a number of mechanical elements that are capable of moving relative to one another to enable the robot to move an object, which will be referred to below as a *payload,* along a defined path, e.g., from a source location to a destination location. The mechanical elements will be referred to herein as *members.* To allow a first member of the robot to move relative to a second member, the members are attached at a junction having between one and six (three in translation, three in rotation) degrees of freedom.

A motor for each degree of freedom provides a motive force to move the second member relative to the first member in its respective degree of freedom. The motor is controlled by a motor servo that receives a feedback signal from a position sensor that measures the motion of the second member relative to the first member at the junction. The motor servo additionally receives position commands from a controller that controls the overall movement of the robot. The position commands define each position to which the motor is to move the second element.

All members of the robot are subject to the force of gravity. However, some members are configured such that one would not move relative to the other in response to the force of gravity in the event that power is removed from the servo motor that moves one relative to the other. For example, one member that is only capable of movement relative to another member in translation along a horizontal axis or in rotation about a vertical axis will not move relative to the other member in the event that power is removed from the servo motor that moves one relative to the other. The junction between such members will be referred to constituting a *gravity-independent axis* of the robot. On the other hand, one member that is capable of movement relative to another member in translation along a vertical axis or in rotation about a horizontal axis will move relative to the other member in the event that power is removed from the servo motor that moves one relative to the other. The junction between such members will be referred to constituting a *gravity-loaded axis* of the robot.

A robot typically has to be trained to enable the robot to perform a given operation. In one training protocol used for training pick-and-place robots, a user uses jog buttons on a remote teaching pendant or on a connected PC (an *input device*) to provide inputs to the control system that constitutes part of the robot. The user-provided inputs cause the robot to move in a manner that causes the portion of the robot that engages with the payload and known as an *end effector* to engage with a payload located at the source location. Further user-provided inputs cause the robot to move in a manner that moves the payload towards the destination location along a path defined by the user-provided inputs. At the destination location, further user-provided inputs cause the robot to move in a manner that aligns the payload with the destination location, deposits the payload at the destination location and typically disengages the end-effector from the payload. The position of the robot is then registered in the controller using a button on the teaching pendant or software run on the connected PC. Typically, the user also used the PC to enter a name to associate with the position. This training protocol is tedious and time consuming

The training protocol just described is typically carried out by two people: a first person operates the user input device to control the movement of the robot; a second person acts as an observer that carefully observes the operation of the robot and provides to the first person reports on such positional relationships as that between the end effector and the payload, that between the payload and various obstructions as the robot moves the payload towards the destination location, and that between payload and the destination location. The above-described training operation can be performed by one person who both operates the robot and observes the results of the user-provided instructions, but one-person training typically takes more than twice as long as two-person training so that two-person training is more commonly used..

A simplification introduced several years ago involved removing power from the respective servo motors of all the gravity-independent axes of the robot. This leaves such axes free to be moved by hand during the training process. However, all the gravity-loaded axes of the robot remained powered and position-controlled, and therefore had to be controlled during the training process by a remote teaching pendant or a connected PC in a manner similar to that described above. Even with the simplification just described, the training protocol remains tedious and time consuming, and, as noted above, typically requires two users. Moreover, for more complicated robots, the time required for training can increase non-linearly.

Accordingly, what is needed is a further simplification of the training process. US 6 222 338 B1 describes a method for the direct teaching of automatic machinery systems comprising a plurality of arms and corresponding actuators for equilibrating the arms against payloads and displacing them to operative positions, when desired. Compensation for the external forces applied is performed by sensing changes in the torque applied to the corresponding motor.

### Brief Description of the Drawings

Figure 1 is a schematic drawing showing an example of a pick-and-place robot in accordance with an embodiment of the invention.
Figure 2 is a block diagram showing an example of the servo that controls the stage motor in the robot shown in Figure 1.
Figure 3 is a block diagram showing an example of the servo, motor and position sensor that constitute parts of one of the bearing assemblies of the robot shown in Figure 1.
Figure 4 is a schematic drawing showing an example of a pick-and-place robot in accordance with another embodiment of the invention.
Figure 5 is a block diagram showing an example of a dynamic target current signal generator that generates the dynamic target current signal for each of the servos that control motion relative to a respective one of the gravitationally-loaded axes in the robot shown in Figure 4.
Figures 6A and 6B are isometric views showing an example of a training payload and an example of an end effector before and after, respectively, engagement with an example of a payload locating device.
Figure 6C is an isometric view showing an example of engagement features.
Figure 7A is a flow chart showing an example of a method in accordance with an embodiment of the invention for training a robot.
Figure 7B is a flow chart showing an example of a method in accordance with another embodiment of the invention for training a robot.

### Detailed Description

A robot in accordance with an embodiment of the invention comprises a movable member, a motor operable to change a position of the movable member relative to a gravitationally-loaded axis, and a servo operable to control the motor. The servo has a normal operational mode in which it controls the motor to define the position of the movable member relative to the gravitationally-loaded axis. The servo additionally has a training mode in which it controls the motor to set the movable member to a weightless state. In its weightless state, a user can easily and accurately move the movable member to train the robot.

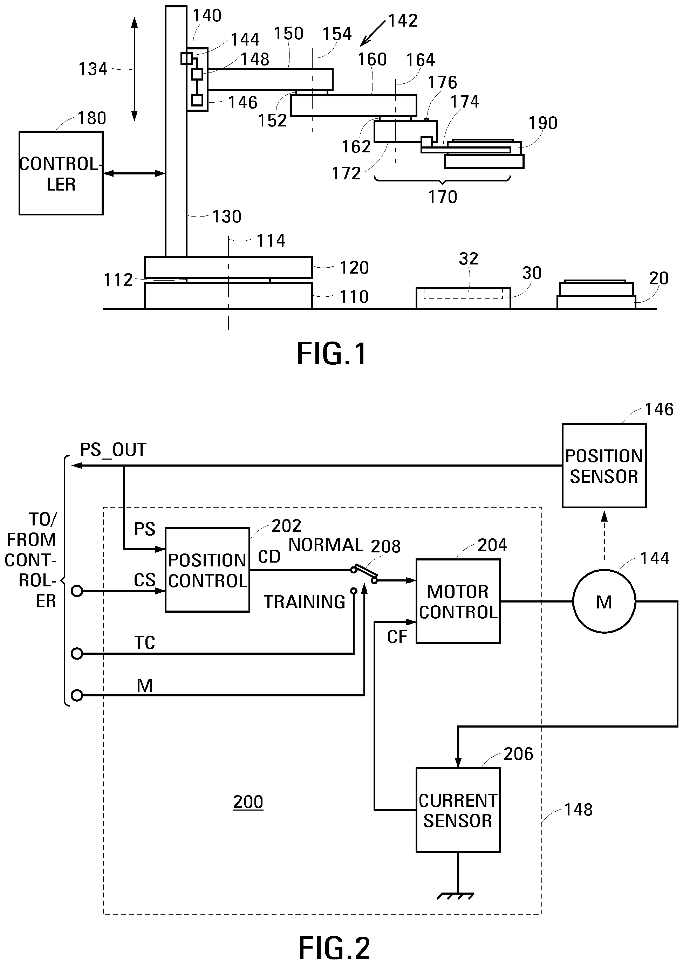

Figure 1 is a schematic drawing showing an example 100 of a pick-and-place robot in accordance with an embodiment of the invention. Robot 100 is composed of a mounting 110, a base 120, an elongate track 130, a stage 140, an upper arm 150, a forearm 160, an end effector 170 and a controller, schematically shown at 180. Base 120 and track 130 as a unit, stage 140 and upper arm 150 as a unit, forearm 160 and end effector 170 are movable members that constitute parts of robot 100. Base 120 and track 130 as a unit, forearm 160 and end effector 170 are movable in rotation, whereas stage 140 and upper arm 150 as a unit are movable in translation.

A bearing (not shown) that constitutes part of a bearing assembly 112 mounts base 120 on mounting 110. The bearing allows base 120 to rotate relative to mounting 110 about a vertical axis 114. Track 130 extends vertically from a location on base 120 offset from axis 114. Stage 140 is mounted on track 130 so that stage 140 can move along an axis 134 that extends vertically along the length of track 130. In one embodiment, stage 140 is slidably mounted on track 130. In another embodiment, flanged wheels (not shown) on stage 140 engage with rails (not shown) that extend at least part-way along the length of track 130. Other ways of mounting stage 140 on track 130 are possible and may be used.

Upper arm 150 extends substantially horizontally from a proximal end affixed to stage 140 to a distal end. A bearing (not shown) that constitutes part of a bearing assembly 152 mounts forearm 160 to upper arm 150. The bearing is located near the proximal end of the forearm and near the distal end of the upper arm. The bearing allows forearm 160 to rotate relative to upper arm 150 about a vertical axis 154. A bearing (not shown) that constitutes part of a bearing assembly 162 mounts end effector 170 to forearm 160. The bearing is located near the distal end of the forearm. The bearing allows end effector 170 to rotate relative to forearm 160 about a vertical axis 164. Upper arm 150, forearm 160 and end effector 170 collectively constitute a dead load 142 carried by stage 140.

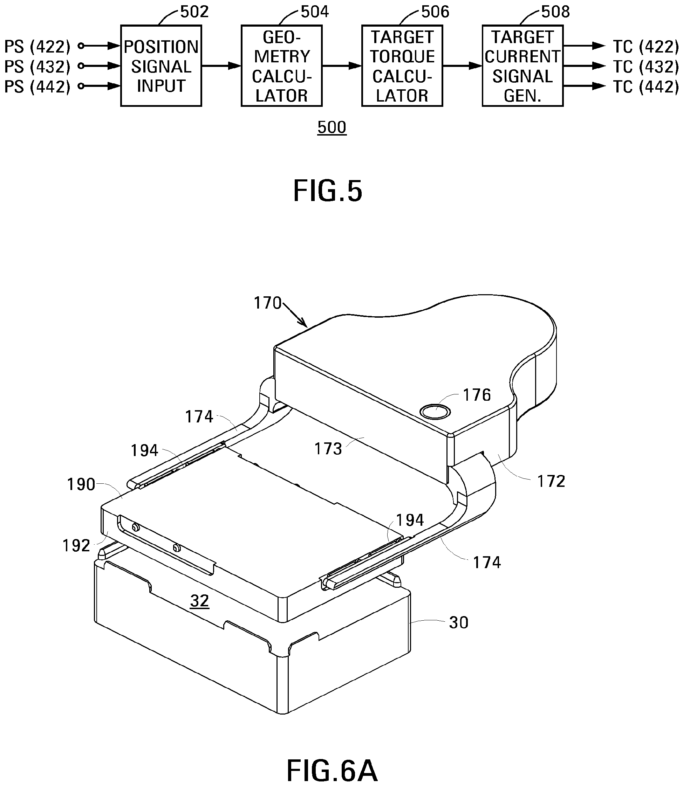

In the example shown in Figure 1, end effector 170 is composed of a hand 172 and a pair of opposed grippers 174, only one of which is shown, that extend substantially horizontally from hand 172. End effector 170 is shown in more detail in Figure 6A. A motor (not shown) mounted within hand 172 is operable to move grippers 174 horizontally towards one another to grip a payload placed between the grippers. Figure 1 shows robot 100 in its training mode with a training payload 190 engaged with grippers 174. In the normal operational mode of robot 100, operational payload 20 is engaged with grippers 174.

In the above descriptions of bearing assemblies 112, 152, 162, a respective bearing is described as allowing one member, i.e., base 120, forearm 160 and end effector 170, to rotate relative to another member, i.e., mounting 110, upper arm 150 and forearm 160, respectively. Such rotation constitutes movement relative to a respective gravity-independent axis 114, 154, 164. The member that is allowed to rotate will be referred to as a *rotatable member* and the member relative to which the rotatable member is allowed to rotate will be referred to as a *fixed member.* Each of the bearing assemblies 112, 152, 162 additionally comprises a respective servo motor (not shown) operable to generate a torque sufficient to rotate the rotatable member about respective axis 114, 154, 164 relative to the respective fixed member. Each of the bearing assemblies additionally comprises a respective position sensor (not shown) that generates an electrical signal that quantifies the rotation of the rotatable member about respective axis 114, 154, 164 relative to the respective fixed member. Each position sensor generates a respective electrical position signal that is provided to the respective servo that controls the respective servo motor. The servo operates in response to the electrical position signal and a control signal provided by controller 180. The control signal indicates a target position of the rotatable member. In this case, the target position is a target rotation. In response to the control signal and the position signal, the servo operates to drive the respective motor in a manner that causes the motor to rotate the rotatable member to the rotation represented by the control signal and to hold the rotatable member at that rotation until the control signal changes.

Stage 140, dead load 142 and payload 20 are moved vertically along track 130 by a motive force provided by a suitable motor that will be referred to herein as a *stage motor* and that is schematically shown at 144. Movement of stage 140 along track 130 constitutes movement relative to gravitationally-loaded axis 134. The motive force provided by stage motor 144 additionally opposes the weight of stage 140, dead load 142 and payload 20 to maintain the vertical position of the stage when the stage is not in motion. In one embodiment, stage motor 144 is a linear motor composed of a linear motor rotor (not shown) mounted on stage 140 and a linear motor stator (not shown) composed of magnet segments arrayed along the length of track 130. Linear motors are known in the art so stage motor 144 will not be described in detail. In another embodiment, a rotary motor (not shown) and a rotary-to-linear converter mounted on stage 140 constitute the stage motor. Such an arrangement is described in United States patent application serial no. 12/241,437 of Wagner, entitled *Automatic System Brake* and assigned to the assignee of this application. Figure 1 shows stage motor 144 as part of stage 140, but the stage motor need not be part of the stage. In yet another embodiment, a motor mounted in base 120 and a transmission mechanism such as a lead screw or a belt that couples the motive force generated by the motor to stage 140 collectively constitute stage motor 144. Other ways of providing motive force to stage 140 are possible and may be used.

Robot 100 additionally comprises a position sensor schematically shown at 146. Position sensor 146 determines the absolute or relative position of stage 140 along track 130. In one embodiment, track 130 carries a position-representing pattern that extends along the length of the track. The pattern is read by sensors mounted on stage 140. Circuitry that constitutes part of the stage, controller 180 or another part of robot 100 converts electrical signals generated by the sensors into an electrical position signal that represents the absolute or relative position of stage 140 along track 130. In another embodiment, the electrical position signal is obtained from electrical signals generated by a rotary position sensor mounted on stage 140 in a manner similar to that described in above-mentioned United States patent application serial no. 12/241,437. The rotary position sensor is driven by a linear-to-rotary converter so that the electrical position signal represents the relative position of stage 140 along track 130. Figure 1 shows position sensor 146 as part of stage 140, but the position sensor need not be part of the stage. In yet another embodiment, an interferometer mounted at one end of track 130 generates the electrical position signal representing the position of stage 140 along track 130.

Finally, robot 100 additionally comprises a position servo schematically shown at 148. Position servo 148 operates in response to the electrical position signal PS received from position sensor 146 and a control signal CS (Figure 2) received from controller 180. Control signal CS indicates a target position of the stage. In response to control signal CS and position signal PS, servo 148 operates to drive stage motor 144 in a manner that causes the stage motor to move stage 140 to the position represented by the control signal and to hold the stage in that position until the control signal changes.

Axes 114, 154, and 164 are vertical axes about which base 120, forearm 160 and end effector 170 can rotate. Consequently, axes 114, 154 and 164 are gravity-independent axes. Removing power from the respective motor (not shown) incorporated in one or more of bearing assemblies 112, 152, 162 does not allow the force of gravity to cause the respective rotatable members of robot 100 to rotate about their respective axes. However, with the power removed from the respective motor incorporated in one or more of bearing assemblies 112, 152, 162, a user can rotate the respective rotatable members of the robot about their respective axes 114, 154, and 164 by hand.

Axis 134 is also a vertical axis, but stage 140 moves along axis 134 in translation. Consequently, axis 134 is a gravitationally-loaded axis. Removing power from stage motor 144 that provides motive force to stage 140 allows the force of gravity to cause stage 140, and dead load 142 and payload 20 mounted on stage 140, to fall towards base 120. The rate at which stage 140 accelerates depends on the structure of stage motor 144: in the examples cited above, a linear motor used as stage motor 144 will allow stage 140 to accelerate most quickly whereas a motor coupled to the stage by a lead screw will allow the stage accelerate most slowly. Servo 148 that controls stage motor 144 prevents stage 140 from falling but, in its normal operating mode, servo 148 prevents the user from moving stage 140 along track 130 by hand. However, in robot 100 in accordance with an embodiment of the invention, servo 148 has an additional operational mode to which it is set when robot 100 is being trained. In this additional operational mode, servo 148 controls stage motor 144 in a manner that sets stage 140 to a weightless state by causing stage motor 144 to apply to stage 140 a motive force substantially equal to and opposite the combined weight of stage 140, dead load 142 and payload 20.

With stage 140 in a weightless state, and power removed from the motors actuating the gravity-independent axes, a user can move robot 100 in all of its degrees of freedom. Robot 100 is trained simply by instructing the robot to pick up training payload 190 from a known starting location using controller 180 or a GUI command on a connected PC. Alternatively, if robot 100 has no known locations, the user manually places the training payload between grippers 174 and then closes the grippers to engage the grippers and the training payload. The user then sets robot 100 to its training mode using a GUI command on the connected PC. In the training mode, power is removed from the motors actuating all of the gravity-independent axes and position servo 148 is set to its training mode in which it sets stage 140 to a weightless state. As a result, in the training mode of robot 100, all joints of the robot are free to move and are weightless. Additionally, in the training mode of robot 100, the respective position signals output by all of the position sensors of the robot are fed to controller 180.

The user then moves end effector 170 (with training payload 190 engaged with grippers 174) to set training payload 190 to a first position and provides a "mark" signal to controller 180. Typically, the user physically engages the training payload 190 with a payload locating device located at the destination location. An exemplary payload locating device is shown at 30. The "mark" signal can be provided using a mouse or a button on a teaching pendant. In the example shown, a button 176 is provided on end effector 170 as a user input device for the user to provide the "mark" signal. Button 176 is electrically connected to controller 180. In response to the "mark" signal, controller 180 records each one the position signals of robot 100 or a representation of such position signals. Controller 180 then provides a visible and/or audible signal indicating that the position signals have been recorded. In one example, an illuminated ring around button 176 on end effector 170 flashes to communicate that the position signals have been registered. The user then moves end effector 170 to locate training payload 190 at the next destination location in the operational sequence of robot 100 and, when the training payload is appropriately aligned with its destination location, provides the "mark" signal to cause controller 180 to record the position signals with the training payload at its new destination location. In systems in which the path between two destination locations is critical, the user can provide "mark" signals at intermediate points between the destination locations, or can provide a continuous "mark" signal along the entire path along which the user moves the training payload between the destination locations.

The user repeats the process just described until all of the destination locations in the operational sequence have been trained. After all the destination locations in the operational sequence have been trained, the user uses the connected PC to configure each destination location, assigning a name, and entering various other properties, such as one or more operations to be performed at the destination location and imposing constraints on the path to be followed from one destination location to the next. Once this has been done, robot 100 is switched back to its normal operational mode and a test run is performed.

Figure 2 is a block diagram showing an example 200 of servo 148 that controls stage motor 144 in robot 100 shown in Figure 1. Servo 200 is composed of a position control system 202, a motor control system 204, a current sensor 206 and a mode switch 208. Position control system 202 has a normal input, a feedback input and an output. Motor control system 204 has a normal input, a feedback input and an output. Current sensor 206 has a current input, a current output and a sense output. Mode switch 208 is a controlled single-pole changeover switch having a first pole, a second pole and a common terminal. Moreover, stage motor 144 has a first terminal and a second terminal and position sensor 146 has an output terminal.

In servo 200, the normal input of position control system 202 is connected to receive control signal CS from controller 180 and the feedback input of the position control system is connected to the output of position sensor 146 from which it receives electrical position signal PS. Position signal PS is additionally output to controller 180 as position output signal PS_OUT. The output of position control system 202 is connected to the first pole of mode switch 208. The second pole of mode switch 208 is connected to receive a target current signal TC from controller 180. The common terminal of mode switch 208 is connected to the normal input of motor control system 204. The control input of mode switch 208 is connected to receive a mode control signal M from controller 180. The output of motor control system 204 is connected to the first terminal of stage motor 144. The second terminal of stage motor 144 is connected to the current input of current sensor 206. The current output of current sensor 206 is connected ground or another low-impedance point. The sense output of current sensor 206 is connected to a feedback input of motor control system 204. Other configurations of servo 200 are possible and may be used.

In the normal operating mode of servo 200, one state of mode control signal M received from controller 180 sets mode switch 208 to in its "normal" state in which the common terminal is connected to the first pole. Servo 200 receives control signal CS from controller 180. Control signal CS defines a target position along track 130 to which stage 140 is to move and is received by position control system 202. Position control system 202 additionally receives position signal PS from position sensor 146. Position signal PS represents the current position of stage 140 along track 130. In response to control signal CS and position signal PS and other parameters defining the operation of stage 140, position control system 202 outputs a current-defining signal CD defining a current to be applied to stage motor 144 to cause the motor to move the stage towards the target position. Current-defining signal CD is input to motor control system 204 via mode switch 208 in its "normal" state. Motor control system 204 additionally receives current feedback signal CF from current sensor 206 that represents the current through stage motor 144. In response to current-defining signal CD and current feedback signal CF, motor control system 204 changes the operating conditions of stage motor 144 until the current through the stage motor, as measured by current sensor 206, is equal to that defined by current-defining signal CD.

In the training mode of servo 200, the other state of mode control signal M received from controller 180 sets mode switch 208 to in its "training" state in which the common terminal is connected to the second pole. In the training mode of robot 100, servo 200 receives target current signal TC from controller 180. Target current signal CS defines a target current to be passed through stage motor 144. An electric motor has a well-defined relationship between motive force and current. With a linear electric motor used a stage motor 144, the current passing through the stage motor is directly converted to an actuation force directed along track 130 in a direction opposite to the combined weight of stage 140, dead load 142 and training payload 190. With a rotary electric motor used a stage motor 144, the current passing through the stage motor is converted to torque that is converted by some type of mechanical transmission an actuation force directed along track 130 in the direction opposite to the combined weight of stage 140, dead load 142 and training payload 190. The current to be supplied to stage motor 144 to cause stage motor 144, and its associated transmission if appropriate, to generate an actuating force nominally equal to the combined weight of stage 140, dead load 142 and training payload 190 can be calculated from the combined weight of stage 140, dead load 142 and training payload 190. This current is represented by the target current signal TC.

Target current signal TC is input to motor control system 204 via mode switch 208 in its "training" state. Motor control system 204 additionally receives current feedback signal CF from current sensor 206. Current feedback signal CF represents the current through stage motor 144 as measured by current sensor 206. In response to target current signal TC and current feedback signal CF, motor control system 204 changes the operating conditions of stage motor 144 until the current through the stage motor, as measured by current sensor 206, is equal to that defined by target current signal TC. With such current passing through stage motor 144, the actuation force applied to stage 140 is equal to the combined weight of stage 140, dead load 142 and training payload 190, so that stage 140, dead load 142 and training payload 190 are substantially weightless and a user can easily move the stage by hand.

Stage 140 will be regarded as having been moved *by hand* when a user's hand contacts the stage and thereby moves the stage relative to track 130, or when the user's hand contacts a member of the robot coupled to the stage and thereby moves the member, or when the user's hand contacts a payload coupled to the stage and thereby moves the payload, and such movement of the member or the payload moves the stage relative to the track. Similarly, robot 100 will be regarded as having been moved *by hand* when a user's hand contacts any member of the robot and thereby moves such member and/or one or more members and/or a payload coupled to such member, or when the user's hand contacts a payload coupled to the robot and thereby moves the payload and/or one or more members of the robot coupled to the payload.

Since motion of stage 140 along track 130 is typically additionally subject to a friction force FF due to friction, such force being additionally directed along the length of track 130 in a direction opposite the direction of motion of stage 140 , the actuation force AF generated by stage motor 144 does not have to balance the combined weight CW of stage 140, dead load 142 and training payload 190 exactly. As long as actuation force is equal to the combined weight plus or minus the force due to friction, i.e., AF = CW ± FF, stage 140 will appear weightless and can be moved by hand. Thus, a constant value of current target signal TC can be used to maintain stage 140 in a weightless state when robot 100 is in its training mode. For example, in typical applications, controller 180 does not have to change target current signal TC depending on whether grippers 174 are engaged with training payload 190. Typically, target current signal TC would only have to be changed depending on whether grippers 174 are engaged with training payload 190 if the weight of the training payload was greater than friction force FF.

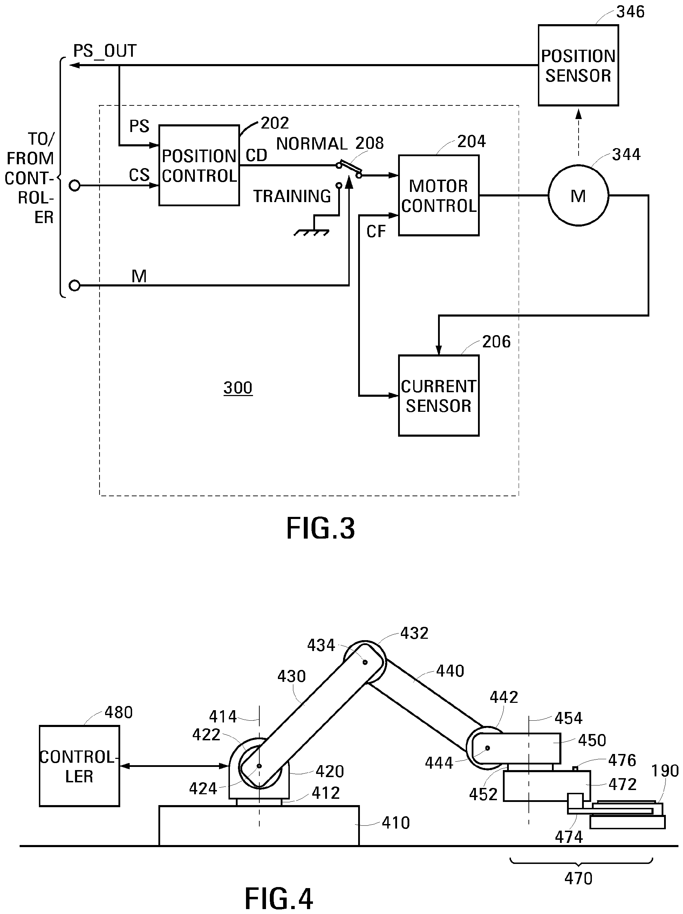

Figure 3 is a block diagram showing an example 300 of the servo, motor 344 and position sensor 346 that constitute parts of one of the bearing assemblies 112, 152, 162. The remaining bearing assemblies may be similarly structured. Servo 300 is similar in structure to servo 200 described above with reference to Figure 2, but lacks an input for receiving target current signal TC from controller 180. Instead, the second pole of mode switch 208 is connected to a ground or another voltage or current corresponding to a motor current of zero. Servo 300 controls a motor 344 that rotates the respective movable member relative to the respective fixed member, as described above. Backlash errors introduced by a drive mechanism interposed between the motor and the movable member are eliminated by using a direct-drive motor as motor 344. Backlash is an issue when robot 100 is positioned by hand because such positioning would drive a drive mechanism to one extreme of the backlash whereas normal operation would drive the drive mechanism to the opposite extreme of the backlash. Backlash would manifest itself in an undesirable offset between the position to which the training payload is moved by hand during training and the position to which robot 100 would move the training payload during normal operation.

Position sensor 346 generates and supplies to servo 300 an electrical position signal PS that represents the rotational position of the respective movable member relative to the respective fixed member, as described above. Position signal PS is also output to controller 180 as position output signal PS_OUT.

One state of mode control signal M received from controller 180 sets mode switch 208 to its "normal" state in which servo 300 operates in a manner similar to that of servo 200, except that motor 344 drives the movable member in rotation rather than in translation. The other state of mode control signal M received from controller 180 sets mode switch 208 to its "training" state in which motor control system 204 receives an input corresponding to a motor current of zero. Motor control system 204 additionally receives current feedback signal CF from current sensor 206. Current feedback signal CF represents the current through motor 344 as measured by current sensor 206. In response to the input corresponding to a motor current of zero and current feedback signal CF, motor control system 204 changes the operating conditions of motor 344 until the current through the motor, as measured by current sensor 206, is equal to zero. With no current passing through motor 344, and, hence, power removed from motor 344, the movable member can easily be rotated by hand relative to the fixed member. Other ways of removing power from motor 344 exist and can be used.

With the servos similar to servo 300 controlling the respective motors actuating about all the gravity-independent axes to remove power from these motors in the training mode, and with the gravitationally-loaded axis set to a weightless state, robot 100 can be moved by hand in all of its degrees of freedom. When the user is satisfied that the training payload is properly located at the destination location, the user provides the "mark" signal to controller 180. In response to the "mark" signal, the controller records the respective position signal PS_OUT received from each of the position sensors constituting robot 100. Alternatively, a representation of each position signal may be recorded. Each position signal represents a rotational position or a translational position of a respective degree of freedom of robot 100. Collectively, the position signals represent the configuration of robot 100 when the training payload is located at the destination location. In the normal operational mode of robot 100, controller 180 outputting the position signals to the respective servos will return robot 100 to the configuration that it was in when the controller received the "mark" signal. This configuration of the robot positions an operational payload at the destination location.

Figure 4 is a schematic drawing showing an example 400 of a pick-and-place robot in accordance with another embodiment of the invention. Robot 400 has multiple gravitationally-loaded axes and the motive force needed to maintain its movable members in the weightless state varies as the robot is moved by hand. Robot 400 is composed of a mounting 410, a base 420, an upper arm 430, a forearm 440, a wrist 450, an end effector 470 and a controller, schematically shown at 480. Base 420, upper arm 430, forearm 440, wrist 450 and end effector 470 are moveable members that constitute parts of robot 400. All the movable members of robot 400 are movable in rotation. A bearing (not shown) that constitutes part of a bearing assembly 412 mounts base 420 on mounting 410. The bearing allows base 420 to rotate relative to mounting 410 about a vertical axis 414.

A bearing (not shown) that constitutes part of a bearing assembly 422 mounts upper arm 430 to base 420. The bearing is located near the proximal end of the upper arm. The bearing allows upper arm 430 to rotate relative to base 420 about a horizontal axis 424. A bearing (not shown) that constitutes part of a bearing assembly 432 mounts forearm 440 to upper arm 430. The bearing is located near the proximal end of the forearm and near the distal end of the upper arm. The bearing allows forearm 440 to rotate relative to upper arm 430 about a horizontal axis 434. A bearing (not shown) that constitutes part of a bearing assembly 442 mounts wrist 450 to forearm 440. The bearing is located near the distal end of the forearm and near the proximal end of the wrist. The bearing allows wrist 450 to rotate relative to forearm 440 about a horizontal axis 444. A bearing (not shown) that constitutes part of a bearing assembly 452 mounts end effector 470 to wrist 450. The bearing is located near the distal end of the wrist. The bearing allows end effector 470 to rotate relative to wrist 450 about a vertical axis 454. Upper arm 430, forearm 440, wrist 450 and end effector 470 collectively constitute a dead load 426 carried by base 420. Similarly, forearm 440, wrist 450 and end effector 470 collectively constitute a dead load 436 carried by upper arm 430; and wrist 450 and end effector 470 collectively constitute a dead load 446 carried by forearm 440.

In the example shown in Figure 4, end effector 470 is composed of a hand 472 and a pair of opposed grippers 474, only one of which is shown, that extend substantially horizontally from hand 472. A motor (not shown) mounted within hand 472 is operable to move grippers 474 horizontally towards one another to grip a payload placed between the grippers. A button 476 is provided on end effector 470 as a user input device for the user to provide the above-described "mark" signal. Button 476 is electrically connected to controller 480. Figure 4 shows robot 400 in its training mode with training payload 190 engaged with grippers 474. In the normal operational mode of robot 400 operational payload 20 (Figure 1) is engaged with grippers 474.

In the above descriptions of bearing assemblies 412, 422, 432, 442, 452, a respective bearing is described as allowing one member, i.e., base 120, upper arm 430, forearm 440, wrist 450 and end effector 470, to rotate relative to another member, i.e., mounting 410, base 420, upper arm 430, forearm 440, and wrist 450, respectively. Rotation of base 120 and end-effector 470 constitutes movement relative to a respective gravity- independent axis 414, 454, whereas rotation of upper arm 430, forearm 440 and wrist 450 constitutes movement relative to a respective gravitationally-loaded axis 424, 434, 444. As described above, the member that is allowed to rotate will be referred to as a *rotatable member* and the member relative to which the rotatable member is allowed to rotate will be referred to as a *fixed member.* Each of the bearing assemblies 412, 422, 432, 442, 452 additionally comprises a respective servo motor (not shown) operable to generate a torque sufficient to rotate the rotatable member about respective axis 414, 424, 434, 444, 452 relative to the respective fixed member. Each of the bearing assemblies additionally comprises a respective position sensor (not shown) that generates an electrical signal that quantifies the rotation of the rotatable member about respective axis 414, 424, 434, 444, 454 relative to the respective fixed member. Each position sensor generates a respective electrical position signal that is provided to the respective servo that controls the respective servo motor. The servo operates in response to the electrical position signal and a control signal provided by controller 480. The control signal indicates a target position of the rotatable member. In this case, the target position is a target rotation. In response to the control signal and the position signal, the servo operates to drive the respective motor in a manner that causes the motor to rotate the rotatable member to the rotation represented by the control signal and to hold the rotatable member at that rotation until the control signal changes.

Axes 414 and 454 are vertical axes about which base 420 and end effector 470, respectively, can rotate. Consequently, axes 414 and 454 are gravity-independent axes. Removing power from the respective motor (not shown) incorporated in one or more of bearing assemblies 412 and 452 does not allow the force of gravity to cause the respective rotatable members of robot 400 to rotate about their respective axes. However, with the power removed from the respective motor incorporated in one or more of bearing assemblies 412 and 452, a user can rotate the respective rotatable members of the robot about their respective axes 414 and 454 by hand.

Axes 424, 434 and 444 are horizontal axes about which upper arm 430, forearm 440 and wrist 450, respectively, can rotate. Consequently, axes 424, 434 and 444 are gravitationally-loaded axes. Removing power from the respective motor in one or more of the bearing assemblies 422, 432 and 442 allows the force of gravity to cause upper arm 430, forearm 440 and wrist 450 and the dead load each carries, to rotate about the bearing at the proximal end thereof such that the distal end thereof falls towards mounting 410. This bearing will be referred to as a *proximal end bearing.* The rate at which any one member accelerates depends on the weight of the element, the dead load and payload carried by the member and friction at the proximal-end bearing. In normal operation of robot 400, the servo that controls the motor that rotates the rotatable member about the proximal-end bearing prevents the distal end of the rotatable member and the dead load carried by the rotatable member from falling, but the servo additionally prevents the user from rotating the rotatable member about the proximal-end bearing by hand. In robot 400 in accordance with an embodiment of the invention, each of the servos that controls motion about a gravitationally-loaded axis has an additional operational mode to which it is set when robot 400 is being trained. In this additional operational mode, which will be referred to as a *training mode,* each servo that controls rotation about a horizontal axis controls a respective motor in a manner that sets the respective rotatable member to a weightless state by causing the motor to apply to the member a torque substantially equal to and opposite torque applied to the rotatable member by the combined weight of the rotatable member and the dead load and payload carried by the rotatable member.

In robot 400, the respective servos that control rotation about vertical axes 414, 454 are similar in structure and operation to servo 300 described above with reference to Figure 3. Moreover, the respective servos that control rotation about horizontal axes 424, 434, 444 are similar in structure and operation to servo 200 described above with reference to Figure 2. However, whereas in robot 100, target current signal TC provided by controller 180 in the training mode of servo 200 is typically a static signal, in robot 400, controller 480 has to calculate a dynamic target current signal that takes into account the changes in torque that the motor controlled by the servo must provide to maintain the weightless state as the configuration of the robot changes in response to the user moving training payload 190 by hand. Figure 5 is a block diagram showing an example of a dynamic target current signal generator 500 that generates the dynamic target current signal TC for each of the servos that control motion about a respective one of the gravitationally-loaded axes. Target current signal generator 500 is typically part of controller 480.

Dynamic target current signal generator 500 is composed of a position signal input module 502, a geometry calculator 504, a target torque calculator 506 and a target current signal generator 508. Position signal input module 502 receives a respective position signal from the position signal generator that constitutes part of each of the bearing assemblies that allows rotation about a gravitationally-loaded axis. In the example shown, position signal input module receives a respective position signal PS(422), PS(432), PS(442) from the position signal generator that constitutes part of each of the bearing assemblies 422, 432 and 442. Each position signal represents the rotational position of the respective movable member about the respective gravitationally-loaded axis relative to the respective fixed member, as described above. Position signal input module 502 provides the respective position signals to geometry calculator 504.

Geometry calculator 504 applies the positional information represented by the position signals received from position signal input module 502 to a model of robot 400 to determine the current configuration of the robot. The model comprises data representing structure of robot 400 and the dimensions of each of the members of robot 400. In an example, for each gravitationally-loaded axis, geometry calculator 504 calculates a horizontal offset between the gravitationally-loaded axis and the center of gravity of the compound body that can rotate about the axis. For example, for gravitationally-loaded axis 434, geometry calculator 504 calculates the horizontal offset between gravitationally-loaded axis 434 and the center of gravity of the compound body composed of forearm 440, wrist 450, end effector 470 and training payload 190 that can rotate about gravitationally-loaded axis 434. The horizontal offset depends on the positions of forearm 440 about axis 434 and wrist 450, end effector 470 and training payload 190 about axis 444. Geometry calculator 504 outputs the horizontal offset calculated for each gravitationally-loaded axis to target torque calculator 506.

For each gravitationally-loaded axis, target torque calculator 506 calculates from the respective horizontal offset calculation received from geometry calculator 506 a specification of the target torque that the motor that provides rotation relative to the axis needs to generate to maintain the compound body that can rotate about the axis in a weightless state. For each gravitationally-loaded axis, the target torque calculator has stored therein information representing the mass of the compound body that can rotate about such axis. In an example, for each gravitationally-loaded axis, target torque calculator 506 calculates a respective target torque specification by multiplying the mass of the compound body that can rotate about such axis by the respective horizontal offset received from geometry calculator 504. For example, target torque calculator 506 calculates the target torque specification for gravitationally-loaded axis 434 by multiplying the mass of the compound body composed of forearm 440, wrist 450, end effector 470 and training payload 190 by the horizontal offset between gravitationally-loaded axis 434 and the center of gravity of the compound body. Target torque calculator 506 outputs a respective target torque specification for each gravitationally-loaded axis to target current signal generator 508.

For each gravitationally-loaded axis, target current signal generator 508 generates a respective target current signal TC that, when applied to the motor control system 204 (Figure 2) that controls the motor at that provides rotation about such axis, causes the motor to generate a torque nominally equal to the target torque specification. Rotation about each gravitationally-loaded axis is typically additionally subject to a friction torque FT due to friction, such torque resisting rotation about the axis. Consequently, the actuation torque AT generated by the motor that provides rotation about the axis does not have to balance the weight-generated torque WT about the axis due to the weight of the compound body exactly. As long as actuation torque is equal to the weight-generated torque plus or minus the torque due to friction, i.e., AT = WT ± FT, the compound body will appear weightless and can be rotated about the axis by hand.

Target current signal generator 508 has stored therein, for each gravitationally-loaded axis, information that represents the current/torque characteristic of the respective motor that provides rotation about the axis and information that represents the current signal to output current conversion characteristic of the respective motor control system that controls the motor. In an example, for each gravitationally-loaded axis, target current signal generator 508 generates a respective target current signal having a magnitude and polarity such that the target current signal, when input to the respective motor control system, causes the motor control system to set the operating conditions of the respective motor such that the motor generates the torque specified by the respective target torque specification received from target torque calculator 506. For example, target current signal generator 508 generates the target current signal TC for gravitationally-loaded axis 434 by dividing the target torque specification by a factor representing the current/torque characteristic of the respective motor that rotates the compound body composed of forearm 440, wrist 450, end effector 470 and training payload 190 about axis 434 and a factor representing the current signal to output current conversion characteristic of the respective motor control system that controls the motor. Target current signal generator 508 outputs a respective target current signal TC(422), TC (432), TC (442) for the servo located in the respective bearing assembly 422, 432, 442 at each gravitationally-loaded axis to the servo that controls rotation about the respective axis.

The currents applied to the motors that provide rotation about respective gravitationally-loaded axes in response to respective target current signals cause the motors to set the respective compound bodies respectively rotated by the motors to a weightless state. This allows the user to move training payload 190 by hand. Such movement of training payload 190 alters the configuration of robot 400. The altered configuration of the robot requires dynamic target current signal generator 500 to re-calculate one or more of the target torque specifications generated by target torque calculator 506 and to change one or more of the target current signals output by target current signal generator 508 to maintain the respective compound bodies rotatable about the gravitationally-loaded axes in their weightless states.

Robot 400 is trained in a manner similar to that described above with reference to the training of robot 100.

Robots in accordance with embodiments of the invention can be configured differently from robots 100 and 400 described above. For example, one or more of the number of translational axes, the number of rotational axes, the number of gravity-independent axes and the number of gravitationally-loaded axes may differ from those of the examples. Many other variations are possible.

Robots in accordance with embodiments of the invention can be rapidly and accurately trained by a single user since the user can both move the robot and observe its position. Such robots can be trained substantially faster than a conventional robot, especially if the robot is complex. Moreover, such robots can be quickly and simply re-trained in the event of a training error, a change in one or more of the destination locations or a change in the equipment located at one or more of the destination locations. Re-training simply involves displaying the list of destination locations, selecting the destination location to be re-trained, engaging the training payload in the grippers of the end effector and the setting robot to training mode. The user then moves the robot by hand to move the training payload to the destination location being re-trained. Once the training payload is appropriately aligned with the destination location, the user provides the "mark" signal to the controller. If no more destination locations are to be re-trained, the user restores the robot to its normal operational mode. This causes the controller to re-calculate any routing operations involving the re-trained destination locations.

The ease with which robots in accordance with embodiments of the invention can be re-trained enables less reproducible ways to be used to mount the items of equipment located at the destination locations. Conventionally, such items of equipment have been attached to an automation table using threaded fasteners and, optionally, dowel pins for repeatable and accurate locating of the equipment. Often, special adapter plates have to be used to allow a piece of equipment to fit into a previously-designed hole pattern that is incompatible with the equipment. In other cases, once a piece of equipment is in place, an engineer can mark and drill custom holes in the automation table to accommodate mounting bolts. Precisely defining the location of each item of equipment on the automation table saves having to re-train the robot each time the configuration of the equipment served by the robot is changed.

The ease with which robots in accordance with embodiments of the invention can be trained and re-trained can eliminate much of the labor involved in mounting each item of equipment served by the robot at a precisely-defined location, and therefore allows less permanent ways of mounting the equipment to be used. Double-sided sticky tape, or hook-and-loop tape, some of which is sold under the trademark VELCRO®, can be used to hold the equipment in place. In an embodiment, a reclosable fastener consisting of plastic strips with fields of mushroom-shaped plastic heads that tightly interlock when pressed together was used to hold the equipment in place. Such fasteners are sold by 3M Company, Saint Paul, MN under the trademark DUAL LOCK® and will be referred to herein as interlocking mushroom fasteners.

In another alternative, the top of the automation table is made of a magnetic material, such as martensitic stainless steel sheet, and each item of equipment is fitted with magnetic leveling feet. Alternatively, each item of equipment is fitted with a mounting plate incorporating a switchable magnetic field generator. In a first switch position, the mounting plate generates a strong magnetic field that holds the mounting plate in position on the automation table. In a second switch position, the magnetic field is substantially reduced, allowing the piece of equipment to be easily moved or removed. Another option is to fit each item of equipment with corner brackets with either permanent magnets or switchable magnets in them to hold the equipment in place. Items of equipment that are swapped in and out of a robotic system incorporating a robot in accordance with an embodiment of the invention have reduced requirements for locating features because the locations of such equipment can easily be re-trained each time the equipment is installed in the system.

In training mode, robots in accordance with embodiments of the invention remove power from motors that provide movement relative to gravity-independent axes and set members that move relative to gravitationally-loaded axes to a weightless state. This enables a user to move a training payload engaged with the robot by hand to the various destination locations to train the robot. The ability of the training protocol to use the exquisite hand-eye coordination capability of a human operator to align the training payload quickly and accurately with the destination location, in addition to reducing the time needed to train the robot, additionally enables the accuracy of the training process to be increased.

Referring once more to Figure 1, payload locating device 30 is typically configured to provide a loose fit with operational payload 20 when operational payload 20 is engaged with the payload locating device to ensure that the robot in its normal operating mode will successfully engage the operational payload with the payload locating device notwithstanding a tolerance in the positioning accuracy of the robot. Conventionally, robots are trained using an operational payload because the above-described conventional way of moving the payload during training using external, user-supplied inputs to the controller does not allow the payload to be positioned very accurately during training. However, an inaccurate training location recorded during training can give rise to problems during normal operation. The above-described positioning tolerance during normal operation, when combined with an inaccurate training location, will sometimes prevent the payload from successfully engaging with the payload locating device. If this occurs more than very occasionally, retraining at least of the affected destination location is necessary.

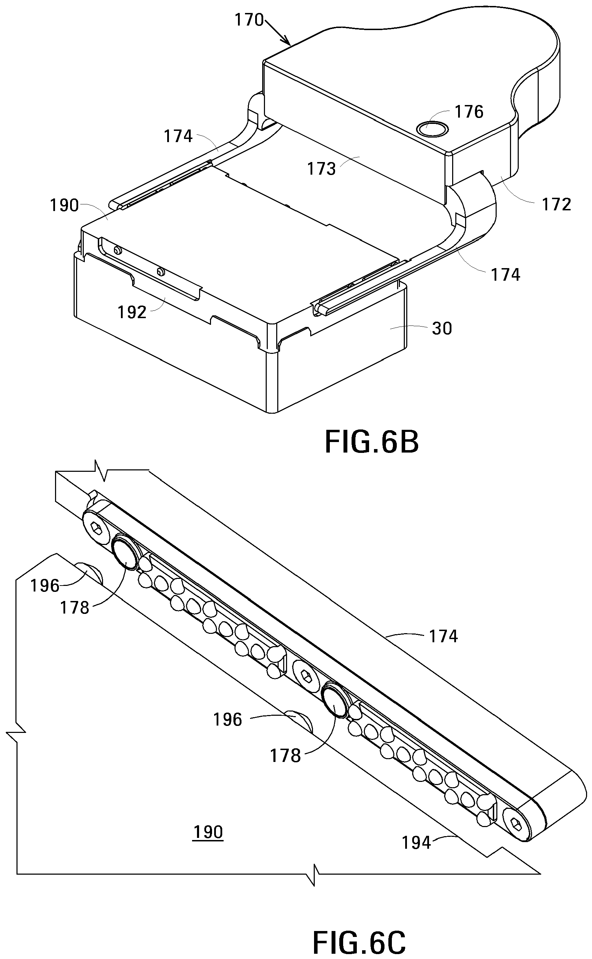

Figures 6A and 6B are isometric views showing an example of training payload 190 and an example of end effector 170, both in accordance with an embodiment of the invention, before and while, respectively, training payload 190 is engaged with an example of payload locating device 30. Referring additionally to Figure 1, training payload 190 generally mimics the shape of operational payload 20 but is dimensioned such that it has a snug fit with all the payload locating devices of the robotic system of which a robot in accordance with an embodiment of the invention operates. Figure 6A shows a recess 32 defined by payload locating device 30 into which a lower portion of a skirt 192 of training payload 190 fits. The length and width of the skirt 192 of training payload 190 are both slightly larger than the length and width, respectively, of the skirt of a nominal operational payload. As a result, skirt 192 fits snugly into recess 32 whereas the skirt of operational payload 20 fits relatively loosely. In other words, the fit of training payload 190 in payload locating device 30 has a smaller tolerance than the fit of operational payload 20 in the payload locating device. In robotic systems comprising an additional payload locating device into which an upper portion of training payload 190 fits, such upper portion of the training payload is additionally dimensioned such that the fit of the upper portion of the training payload with the respective payload locating device has a smaller tolerance than that of the upper portion of the operational payload.

Training payload 190 additionally has one or more engagement features that accurately define a positional relationship between training payload 190 and end effector 170 when grippers 174 that constitute part of end effector 170 engage with the training payload. The positional relationship defined by the engagement features corresponds to that between the nominal location of an operational payload and the end effector when the operational payload is engaged with the grippers. This nominal location corresponds to the center of the range of locations where the grippers can engage the operational payload. The engagement features cause the positional relationship between the training payload and the end effector to have a smaller tolerance than that between the operational payload, which lacks such engagement features, and the end effector.

Figure 6C is an isometric view showing an example of engagement features composed of two cylindrical dowels 196 that extend laterally from training payload 190 at respective locations offset from one another in a pair of opposed regions 194 corresponding to the locations on operational payload 20 (Figure 1) that engage with grippers 174. Dowels 196 are dimensioned to fit snugly in corresponding recesses 178 defined in grippers 174 offset from one another along the length of each gripper. Dowels 196 are tapered at their distal ends to facilitate engagement with recesses 178. Thus, when grippers 174 engage with training payload 190, a dowel 196 extending from training payload 190 engages with a respective recess 178 at four locations around the perimeter of the training payload to define the positional relationship between the end effector and the training payload.

Referring additionally to Figure 6B, dowels 196 engaged with recesses 178 accurately define the positional relationship between training payload 190 and end effector 170 to be the same as the nominal positional relationship between the end effector and an operational payload. Moreover, training payload 190 engaged with payload locating device 30 accurately defines the positional relationship between the training payload and the payload locating device to be the same as the nominal positional relationship between the payload locating device and an operational payload. Consequently, training jig 190 accurately defines the positional relationship between payload locating device 30 and end effector 170 so that the positions registered by the position sensors of the robot with training jig engaged with payload locating device 30 correspond to the nominal position of an operational payload in the payload locating device and to the nominal positional relationship between the end effector and the operational payload. This substantially increases the accuracy with which the positional relationship between the end effector and the payload locating device is taught, and substantially reduces the possibility of the robot failing to engage the operational payload with the payload locating device during normal operation. This in turn reduces the need to re-train the robot even though such re-training is easily done, as noted above.

Training payload 190 is substantially incapable of lateral movement when engaged with payload locating device 30. Such a snug fit would make it very tedious, if not impossible, to engage training jig 190 with payload locating device 30 using the conventional technique of providing user inputs to controller 180, 480 as described above. However, with a robot in accordance with an embodiment the invention in which the end effector and payload can easily be moved by hand, a user can easily engage the training payload with the payload locating device notwithstanding the snug fit between them.

Other engagement features capable of accurately defining the positional relationship between training payload 190 and end effector 170 are possible. In one example, part of the training jig extends towards hand 172 and comprises physical features that engage with corresponding physical features in face 173 of hand 172.

The above described engagement features are positive engagement features that actively define the positional relationship between the training payload and the end effector. Alternatively, non-positive engagement features may be used as the engagement features. For example, optical, magnetic, electrical alignment detectors, or another form of alignment detection may be substituted for dowels 196 and recesses 178 to provide engagement features. Such engagement features typically provide an electrical or other type of signal that indicates a correct positional relationship between end-effector 170 and training payload 190. With such engagement features, the robot is set to its training mode before end effector 170 is engaged with training payload 190. The user then moves the end effector by hand to align grippers 174 with training payload 190, such alignment being indicated by positive signals from the engagement features. The user then provides a command to cause end effector 170 to close grippers 174. With the grippers closed, the user once more checks the signals from the engagement features before beginning the training process.

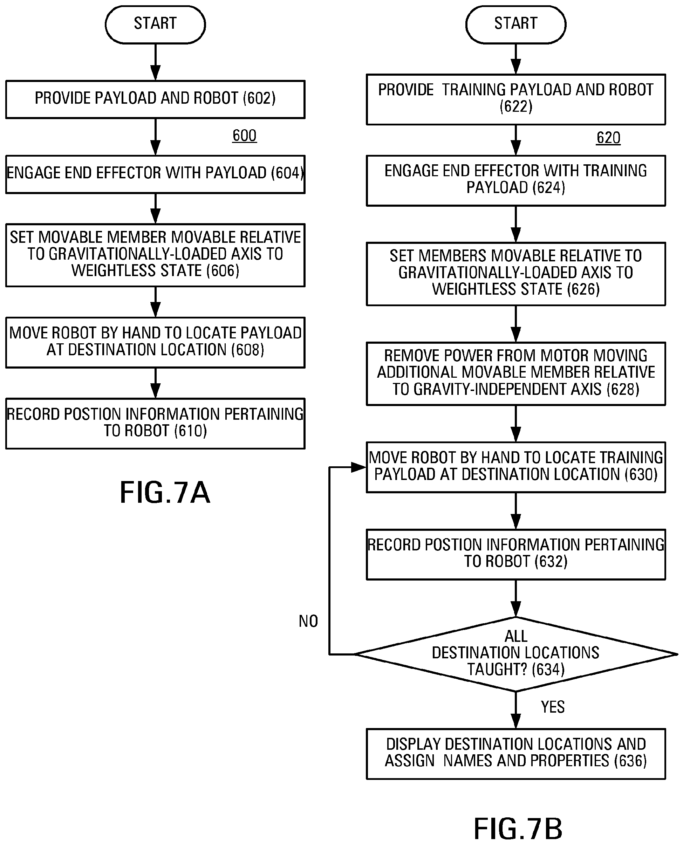

Figure 7A is a flow chart showing an example of a method 600 in accordance with an embodiment of the invention for training a robot. In block 602, a payload and a robot are provided. The robot comprises a movable member movable relative to a gravitationally-loaded axis, and an end effector coupled to the movable member. In block 604, the end effector is engaged with the payload. In block 606, the movable member movable relative to the gravitationally-loaded axis is set to a weightless state. In block 608, the robot is moved by hand to locate the payload at a destination location. In block 610, with the payload located at the destination location, positional information pertaining to the robot is recorded.

Setting the movable member to the weightless state enables a user to move the robot easily by hand to locate the payload quickly and accurately at the destination location. Once the training process is complete, the robot is returned to its normal operating mode. In the normal operating mode, supplying the positional information recorded in block 610 to the robot will return the robot to the configuration it was in when the positional information was recorded, which will cause the robot to move an operational payload to the destination location to which the payload was moved in block 608.

Figure 7B is a flow chart showing an example of a method 620 in accordance with another embodiment of the invention for training a robot. In block 622, a payload and a robot are provided. The robot comprises a movable member movable relative to a gravitationally-loaded axis, an end effector coupled to the movable member, and an additional member movable by a motor relative to a gravity-independent axis. In block 624, the end effector is engaged with the training payload. In block 626, the movable member movable relative to the gravitationally-loaded axis is set to a weightless state. In block 628, power is removed from the motor operable to move the additional member relative to the gravity-independent axis. In block 630, the robot is moved by hand to locate the training payload at a destination location. In block 632, with the payload located at the destination location, positional information pertaining to the robot is recorded. In block 634, a test is performed to determine whether all the destination locations have been taught. A YES result in block 634 causes execution to advance to block 636, where the destination locations are displayed and names and properties are assigned to them. Execution then ends. A NO result in block 634 causes execution to return to block 630, where the robot is moved by hand to locate the training payload at the next destination location.

In an embodiment, in blocks 606 and 626, the robot comprises a motor operable to move the movable member relative to the gravitationally-loaded axis and the movable member is set to its weightless state by supplying current to the motor to cause the motor to generate motive force that offsets the weight of the movable member. The weight of the movable member includes the weight of any dead load and the payload supported by the movable member. In another embodiment, in blocks 606 and 626, the movable member has a variable rotational position, and supplying the current to the motor comprises varying the current depending on the rotational position of the movable member.

In another embodiment, the end effector comprises a user input device and, in blocks 610 and 632, the position information is recorded in response to a command received from the user input device.

To ensure the user's safety when the user moves a robot in accordance with an embodiment with the invention by hand, controllers 180 and 480 may comprise circuitry that, when the robot is in training mode, monitors the position signals received from the robot. Of particular interest are the position signals generated by the position sensors that monitor position with respect to the gravitationally-loaded axes. The controller is configured to monitor the rate of change of such position signals and to restore the robot to its normal operating mode in the event that any of the position signals has a rate of change indicative of falling or movement faster than a threshold speed. As a further safety feature, the end effectors of robots in accordance with some embodiments of the invention can be fitted with an additional user input device (not shown) similar to user input device 176. The additional user input device provides to controller 180, 480 a control signal that will only allow robot 100, 400 to be set to its training mode while the user is providing a suitable input to the additional user input device, e.g., pressing a button. In the event the robot misbehaves in the training mode, the user can simply let go of the additional user input device to restore the robot to its normal operating mode. In the normal operating mode to which the robot is restored by a safety feature, the position signals output by the controller to the robot correspond to the current configuration of the robot and therefore prevent further movement of the robot. As a further safety feature, the servos can include a torque limiter.

In the above-described robots 100, 400, controllers 180, 480 and servos 200, 300 can be implemented in hardware such as an integrated circuit having bipolar, N-MOS, P-MOS or CMOS devices. Design libraries comprising designs for such circuit elements suitable for implementing the above-described functions of the above-mentioned controllers and servos are commercially available can be used to design such hardware implementation of the above-mentioned controllers and servos.

The above-mentioned controllers and servos can alternatively be implemented at least in part using pre-fabricated hardware devices such as an application-specific integrated circuit (ASIC) or a field-programmable gate array (FPGA). Design libraries comprising designs for implementing the above-described functions of the above-mentioned controllers and servos using such pre-fabricated hardware devices are commercially available can be used to configure such pre-fabricated hardware devices to implement the above-mentioned controllers and servos.

The above-mentioned controllers can alternatively be implemented in software running on a suitable computational device (not shown) such as a microprocessor or a digital signal processor (DSP). The above-mentioned controllers may additionally constitute part of a digital signal processor that performs functions in addition to those described. Programming modules capable of programming a computational device to provide the functions of the above-described functions of the above-mentioned controllers are commercially available and may be used to program a computational device to provide a software implementation of the above-mentioned controllers. In such software implementations of the above-mentioned controllers, the various functions described in this disclosure are typically performed ephemerally, and are performed only temporarily as the program executes.

The program in response to which the computational device operates can be fixed in a suitable computer-readable medium (not shown) such as a floppy disk, a hard disk, a CD-ROM, a DVD-ROM, a flash memory, a read-only memory or a programmable read-only memory. The program is then transferred to a non-volatile memory that forms part of the computational device, or is external to the computational device. Alternatively, the program can be transmitted to the non-volatile memory of the computational device by a suitable data link.

This disclosure describes the invention in detail using illustrative embodiments. However, the invention defined by the appended claims is not limited to the precise embodiments described.

## Claims

1. A robot (100, 400), comprising:
a movable member (140, 150);
a motor (144) operable to change a position of the movable member (140, 150) relative to a vertical axis (134); and
a servo (148) operable to control the motor (114), the servo having a normal operational mode in which the servo controls the motor (114) to define the position of the movable member relative to the vertical axis (134) so that the servo (148) prevents the movable member (140, 150) from falling, the servo (148) additionally having a training mode in which the servo (148) supplies to the motor (144) a current in response to which the motor (144) applies to the movable member (140, 150) a motive force that offsets the weight of the movable member (140, 150),
a position sensor (146) operable to provide to the servo (148) position information regarding the position of the movable member (140, 150) relative to the vertical axis (134)
a controller (180, 480) operable in the normal operational mode to provide a position signal to the servo, the controller additionally operable in the training mode to receive the position information from the position sensor (146),
**characterized in that** the controller includes a dynamic target current signal generator (500) active during the training mode for:
receiving the position information from the position sensor (146) as an input,
calculating, based on the position information and a model of the robot, a target torque that the motor (144) needs to offset the weight of the movable member (140, 150),
generating as an output a target current signal (TC) to be provided to the motor (144) in order that the motor (144) applies the target torque to the movable member (140, 150).

2. The robot (100, 400) of any of the preceding claims, comprising at least one of:
a user input device for receiving the command;
the movable member is movable in translation relative to the vertical axis (134); the movable member is movable in rotation relative to the vertical axis (134).

3. The robot (100, 400) of any of the preceding claims, additionally comprising:
an additional movable member coupled to the movable member;
an additional motor operable to move the additional movable member relative to a horizontal axis (424, 434, 444); and
an additional servo operable to control the additional motor, the additional servo having a normal operational mode in which the additional servo controls the additional motor to define the position of the additional movable member relative to the horizontal axis (424, 434, 444), the additional servo additionally having a training mode in which the additional servo removes power from the additional motor.

4. The robot (100, 400) of any of the preceding claims, in which:
the movable member has a variable rotational position; and
the current supplied by the servo varies depending on the rotational position of the movable member.

5. The robot (100, 400) of the preceding claim, comprising at least one of:
an additional position sensor operable to provide to the additional servo position information regarding the position of the additional movable member relative to the horizontal axis (424, 434, 444);
with power removed from the additional motor, the additional movable member is movable by hand, and the robot additionally comprises a controller operable in the normal operational mode to provide respective position signals to the servo and the additional servo and additionally operable in the training mode to receive the respective position information from the position sensor and the additional position sensor and, in response to a command received after the movable members have been moved by hand to desired positions, to record the respective position information.

6. A robotic system for moving an operational payload (20), the robotic system comprising:
a payload locating device (30) dimensioned to engage with the operational payload with a first tolerance;
a robot (100, 400) as claimed in claim 1, the robot operable in the normal operational mode to move the operational payload (20) into engagement with the payload locating device (30); and
a training payload (190) movable by hand in the training mode into engagement with the payload locating device, the training payload (190) dimensioned to engage with the payload locating device with a second tolerance, the second tolerance smaller than the first tolerance.

7. The robotic system of the preceding claim, in which:
the robot (100, 400) engages with the operational payload (20) in a first positional relationship having a first tolerance; and
the training payload (190) additionally comprises engagement features structured to define a second positional relationship between the robot and
the training payload, the second positional relationship having a second tolerance smaller than the first tolerance.

8. The robotic system of the preceding claims 6 or 7, further comprising:
an automation table;
at least one of sticky tape, hook-and-loop tape, interlocking mushroom fasteners and a magnet affixing the payload locating device to the automation table.

9. A method of training a robot (100, 400), the method comprising:
providing a payload (190) and a robot (100, 400) comprising a movable member (140, 150) movable relative to a vertical axis (134), an end effector (170) coupled to the movable member (140, 150) and a motor (144) operable to change a position of the movable member (140, 150) relative to the vertical axis (134);
engaging the end effector (170) with the payload (190);
applying to the movable member (140, 150) a motive force that offsets the weight of the movable member (140, 150);
moving the robot (100, 400) by hand to locate the payload (190) at a destination location; and
with the payload (190) located at the destination location, recording positional information pertaining to the robot, **characterized in that** the method further comprises:
measuring position information regarding the position of the movable member (140, 150),
calculating, based on the position information and a model of the robot, a target torque that the motor (144) needs to offset the weight of the movable member (140, 150),
providing a target current signal (TC) to the motor (144) in order that the motor (144) applies the target torque to the movable member (140, 150).

10. The method of the preceding claim, comprising at least one of:
the robot additionally comprises an additional movable member and a motor operable to move the additional member relative to a horizontal axis (424, 434, 444), and the method additionally comprises removing power from the motor before moving the robot by hand;
the payload is a training payload dimensioned to fit snugly with the destination location;
the end effector comprises a user input device and the recording comprises recording the position information in response to a command received from the user input device.

11. The method of the preceding claim in which:
the movable member has a variable rotational position; and
the supplying comprises varying the current depending on the rotational position of the movable member.

## Patentansprüche

1. Ein Roboter (100, 400) aufweisend:
ein bewegliches Element (140, 150);
einen Motor (144), welcher funktionsfähig ist zum Ändern einer Position des beweglichen Elements (140, 150) relativ zu einer vertikalen Achse (134); und
einen Servo (148), welcher funktionsfähig ist zum Steuern des Motors (114), wobei der Servo einen normalen Betriebsmodus hat, in welchem der Servo den Motor (114) steuert, die Position des beweglichen Elements relativ zu der vertikalen Achse (134) zu definieren, so dass der Servo (148) verhindert, dass das bewegliche Element (140, 150) fällt, wobei der Servo (148) zusätzlich einen Trainingsmodus hat, in welchem der Servo (148) dem Motor (144) einen Strom zuführt, als Reaktion auf welchen der Motor (144) eine Antriebskraft auf das bewegliche Element (140, 150) ausübt, welche das Gewicht des beweglichen Elements (140, 150) ausgleicht,
einen Positionssensor (146), welcher funktionsfähig ist, dem Servo (148) eine Positionsinformation bereitzustellen in Bezug auf die Position des beweglichen Elements (140, 150) relativ zu der vertikalen Achse (134),
einen Controller (180, 480), welcher funktionsfähig ist, in dem normalen Betriebsmodus dem Servo ein Positionssignal bereitzustellen, wobei der Controller zusätzlich funktionsfähig ist, in dem Trainingsmodus die Positionsinformation von dem Positionssensor (146) zu empfangen,
**dadurch gekennzeichnet, dass** der Controller einen dynamischen Ziel-Strom Signalgenerator (500) enthält, welcher während des Trainingsmodus aktiv ist zum:
Empfangen der Positionsinformation von dem Positionssensor (146) als eine Eingabe,
Berechnen, basierend auf der Positionsinformation und einem Modell des Roboters, ein Ziel-Drehmoment, welches der Motor (144) benötigt zum Ausgleichen des Gewichts des beweglichen Elements (140, 150),
Erzeugen, als eine Ausgabe, ein Ziel-Strom Signal (TC), welches dem Motor (144) bereitzustellen ist, damit der Motor (144) das Ziel-Drehmoment auf das bewegliche Element (140, 150) ausübt.

2. Der Roboter (100, 400) gemäß irgendeinem der vorangehenden Ansprüche, aufweisend zumindest eines von:
einer Benutzereingabe Vorrichtung zum Empfangen des Befehls;
das bewegliche Element ist in einer Translation relativ zu der vertikalen Achse (134) beweglich;
das bewegliche Element ist in einer Rotation relativ zu der vertikalen Achse (134) beweglich.

3. Der Roboter (100, 400) gemäß irgendeinem der vorangehenden Ansprüche, zusätzlich aufweisend:
ein zusätzliches bewegliches Element, welches mit dem beweglichen Element gekoppelt ist;
einen zusätzlichen Motor, welcher funktionsfähig ist zum Bewegen des zusätzlichen beweglichen Elements relativ zu einer horizontalen Achse (424, 434, 444); und
einen zusätzlichen Servo, welcher funktionsfähig ist zum Steuern des zusätzlichen Motors, wobei der zusätzliche Servo einen normalen Betriebsmodus hat, in welchem der zusätzliche Servo den zusätzlichen Motor steuert, die Position des zusätzlichen beweglichen Elements relativ zu der horizontalen Achse (424, 434, 444) zu definieren, wobei der zusätzliche Servo zusätzlich einen Trainingsmodus hat, in welchem der zusätzliche Servo dem zusätzlichen Motor Leistung entzieht.

4. Der Roboter (100, 400) gemäß irgendeinem der vorangehenden Ansprüche, in welchem:
das bewegliche Element eine variable Rotationsposition hat; und
der Strom, welcher mittels des Servos zugeführt wird, sich verändert abhängig von der Rotationsposition des beweglichen Elements.

5. Der Roboter (100, 400) des vorangehenden Anspruchs, aufweisend zumindest eines von:
einem zusätzlichen Positionssensor, welcher funktionsfähig ist, dem zusätzlichen Servo eine Positionsinformation bereitzustellen in Bezug auf die Position des zusätzlichen beweglichen Elements relativ zu der horizontalen Achse (424, 434, 444);
wenn die Leistung dem zusätzlichen Motor entzogen ist, ist das zusätzliche bewegliche Element per Hand beweglich und der Roboter weist zusätzlich einen Controller auf, welcher funktionsfähig ist, in dem normalen Betriebsmodus dem Servo und dem zusätzlichen Servo jeweilige Positionssignale bereitzustellen und zusätzlich funktionsfähig ist, in den Trainingsmodus die jeweilige Positionsinformation von dem Positionssensor und dem zusätzlichen Positionssensor zu empfangen und, als Reaktion auf einen Befehl, welcher empfangen wurde, nachdem die beweglichen Elemente per Hand zu gewünschten Positionen bewegt wurden, die jeweilige Positionsinformation zu speichern.

6. Ein Robotersystem zum Bewegen einer funktionsfähigen Nutzlast (20), wobei das Robotersystem aufweist:
eine Nutzlast Lokalisierungsvorrichtung (30), welche dimensioniert ist, die funktionsfähige Nutzlast mit einer ersten Toleranz in Eingriff zu nehmen;
einen Roboter (100, 400) gemäß Anspruch 1, wobei der Roboter funktionsfähig ist, in dem normalen Betriebsmodus die funktionsfähige Nutzlast (20) in den Eingriff mit der Nutzlast Lokalisierungsvorrichtung (30) zu bewegen; und
eine Trainingsnutzlast (190), welche in dem Trainingsmodus per Hand in den Eingriff mit der Nutzlast Lokalisierungsvorrichtung beweglich ist, wobei die Trainingsnutzlast (190) dimensioniert ist, die Nutzlast Lokalisierungsvorrichtung mit einer zweiten Toleranz in Eingriff zu nehmen, wobei die zweite Toleranz kleiner ist als die erste Toleranz.

7. Dass Robotersystem gemäß dem vorangehenden Anspruch, in welchem:
der Roboter (100, 400) die funktionsfähige Nutzlast (20) in einer ersten Positionsbeziehung in Eingriff nimmt, welche eine erste Toleranz hat; und
die Trainingsnutzlast (190) zusätzlich Eingriffsmerkmale aufweist, welche strukturiert sind, eine zweite Positionsbeziehung zwischen dem Roboter und der Trainingsnutzlast zu definieren, wobei die zweite Positionsbeziehung eine zweite Toleranz hat, die kleiner ist als die erste Toleranz.

8. Das Robotersystem gemäß den vorangehenden Ansprüchen 6 oder 7, ferner aufweisend:
einen Automatisierungstisch;
zumindest eines von einem Klebeband, einem Klettverschlussband, ineinandergreifende Pilzkopfverschlüsse und einem Magnet, welche die Nutzlast Lokalisierungsvorrichtung an dem Automatisierungstisch befestigen.

9. Ein Verfahren zum Trainieren eines Roboters (100, 400), wobei das Verfahren aufweist:
Bereitstellen einer Nutzlast (190) und eines Roboters (100, 400), welcher aufweist
ein bewegliches Element (140, 150), welches relativ zu einer vertikalen Achse (134) beweglich ist,
einen Endeffektor (170), welcher mit dem beweglichen Element (140, 150) gekoppelt ist, und
einen Motor (144), welcher funktionsfähig ist zum Ändern einer Position des beweglichen Elements (140, 150) relativ zu der vertikalen Achse (134);
in Eingriff bringen des Endeffektors (170) mit der Nutzlast (190);
Ausüben einer Antriebskraft auf das bewegliche Element (140, 150), welche das Gewicht des beweglichen Elements (140, 150) ausgleicht;
Bewegen des Roboters (100, 400) per Hand zum Lokalisieren der Nutzlast (190) an einem Zielort; und
wenn die Nutzlast (190) an dem Zielort lokalisiert ist, Speichern einer Positionsinformation in Bezug auf den Roboter,
**dadurch gekennzeichnet, dass** das Verfahren ferner aufweist:
Messen einer Positionsinformation in Bezug auf die Position des beweglichen Elements (140, 150),
Berechnen, basierend auf der Positionsinformation und einem Modell des Roboters, eines Ziel-Drehmoments, welches der Motor (144) benötigt zum Ausgleichen des Gewichts des beweglichen Elements (140, 150),
Bereitstellen eines Ziel-Strom Signals (TC) zu dem Motor (144), damit der Motor (144) das Ziel-Drehmoment auf das bewegliche Element (140, 150) ausübt.

10. Das Verfahren gemäß dem vorangehenden Anspruch, aufweisend zumindest eines von:
der Roboter weist zusätzlich ein zusätzliches bewegliches Element und einen Motor auf, welcher funktionsfähig ist zum Bewegen des zusätzlichen Elements relativ zu einer horizontalen Achse (424, 434, 444), und das Verfahren weist zusätzlich ein Entziehen der Leistung von dem Motor vor dem Bewegen des Roboters per Hand auf;
die Nutzlast ist eine Trainingsnutzlast, welche dimensioniert ist, passgenau an den Zielort zu passen;
der Endeffektor weist eine Benutzereingabe Vorrichtung auf und das Speichern weist ein Speichern der Positionsinformation auf, als Reaktion auf einen Befehl, welcher von der Benutzereingabe Vorrichtung empfangen wird.

11. Das Verfahren gemäß dem vorangehenden Anspruch, in welchem:
das bewegliche Element eine veränderbare Rotationsposition hat; und
das Zuführen ein Verändern des Stroms aufweist, abhängig von der Rotationsposition des beweglichen Elements.

## Revendications

1. Robot (100, 400), comprenant :
un organe mobile (140, 150) ;
un moteur (144) opérationnel pour changer une position de l'organe mobile (140, 150) par rapport à un axe vertical (134) ; et
un servomécanisme (148) opérationnel pour commander le moteur (114), le servomécanisme ayant un mode de fonctionnement normal dans lequel le servomécanisme commande le moteur (114) afin de définir la position de l'organe mobile par rapport à l'axe vertical (134) de sorte que le servomécanisme (148) empêche l'organe mobile (140, 150) de tomber, le servomécanisme (148) ayant en plus un mode d'apprentissage dans lequel le servomécanisme (148) alimente le moteur (144) en courant, en réponse de quoi le moteur (144) applique à l'organe mobile (140, 150) une force motrice qui décale le poids de l'organe mobile (140, 150),
un capteur de position (146) opérationnel pour fournir au servomécanisme (148) des informations de position concernant la position de l'organe mobile (140, 150) par rapport à l'axe vertical (134),
un dispositif de commande (180, 480) opérationnel dans le mode de fonctionnement normal pour fournir un signal de position au servomécanisme, le dispositif de commande étant en plus opérationnel dans le mode d'apprentissage pour recevoir les informations de position du capteur de position (146),
**caractérisé en ce que** le dispositif de commande inclut un générateur de signal de courant cible dynamique (500) actif pendant le mode d'apprentissage pour :
recevoir les informations de position du capteur de position (146) sous forme d'entrée,
calculer, sur la base des informations de position et d'un modèle du robot, un couple cible dont le moteur (144) a besoin pour décaler le poids de l'organe mobile (140, 150),
générer sous forme de sortie un signal de courant cible (TC) à fournir au moteur (144), afin que le moteur (144) applique le couple cible à l'organe mobile (140, 150).

2. Robot (100, 400) selon l'une quelconque des revendications précédentes, comprenant au moins l'un parmi :
un dispositif d'entrée utilisateur pour recevoir l'ordre ;
l'organe mobile est mobile en translation par rapport à l'axe vertical (134) ; l'organe mobile est mobile en rotation par rapport à l'axe vertical (134).

3. Robot (100, 400) selon l'une quelconque des revendications précédentes, comprenant en plus :
un organe mobile supplémentaire couplé à l'organe mobile ;
un moteur supplémentaire opérationnel pour déplacer l'organe mobile supplémentaire par rapport à un axe horizontal (424, 434, 444) ; et
un servomécanisme supplémentaire opérationnel pour commander le moteur supplémentaire, le servomécanisme supplémentaire ayant un mode de fonctionnement normal dans lequel le servomécanisme supplémentaire commande le moteur supplémentaire pour définir la position de l'organe mobile supplémentaire par rapport à l'axe horizontal (424, 434, 444), le servomécanisme supplémentaire ayant en plus un mode d'apprentissage dans lequel le servomécanisme supplémentaire coupe l'alimentation électrique du moteur supplémentaire.

4. Robot (100, 400) selon l'une quelconque des revendications précédentes, dans lequel :
l'organe mobile a une position de rotation variable ; et
le courant alimenté par le servomécanisme varie en fonction de la position de rotation de l'organe mobile.

5. Robot (100, 400) selon la revendication précédente, comprenant au moins l'un parmi :
un capteur de position supplémentaire opérationnel pour fournir au servomécanisme supplémentaire des informations de position concernant la position de l'organe mobile supplémentaire par rapport à l'axe horizontal (424, 434, 444) ;
l'alimentation électrique étant coupée du moteur supplémentaire, l'organe mobile supplémentaire est mobile manuellement, et le robot comprenant en plus un dispositif de commande opérationnel dans le mode de fonctionnement normal pour fournir des signaux de position respectifs au servomécanisme et au servomécanisme supplémentaire et étant en plus opérationnel dans le mode d'apprentissage pour recevoir les informations de position respectives du capteur de position et du capteur de position supplémentaire et, en réponse à un ordre reçu après que les organes mobiles ont été déplacés manuellement à des positions souhaitées, pour enregistrer les informations de position respectives.

6. Système robotique pour déplacer une charge utile opérationnelle (20), le système robotique comprenant :
un dispositif de localisation de charge utile (30) dimensionné pour venir en prise avec la charge utile opérationnelle avec une première tolérance ;
un robot (100, 400) tel que revendiqué dans la revendication 1, le robot étant opérationnel dans le mode de fonctionnement normal pour déplacer la charge utile opérationnelle (20) en prise avec le dispositif de localisation de charge utile (30) ; et
une charge utile d'apprentissage (190) mobile manuellement dans le mode d'apprentissage en prise avec le dispositif de localisation de charge utile, la charge utile d'apprentissage (190) étant dimensionnée pour venir en prise avec le dispositif de localisation de charge utile avec une seconde tolérance, la seconde tolérance étant inférieure à la première tolérance.

7. Système robotique selon la revendication précédente, dans lequel :
le robot (100, 400) vient en prise avec la charge utile opérationnelle (20) dans une première relation de position ayant une première tolérance ; et
la charge utile d'apprentissage (190) comprend en plus des caractéristiques de mise en prise structurées pour définir une seconde relation de position entre le robot et la charge utile d'apprentissage, la seconde relation de position ayant une seconde tolérance inférieure à la première tolérance.

8. Système robotique selon les revendications 6 ou 7 précédentes, comprenant en outre :
une table d'automatisation ;
au moins l'un parmi un ruban adhésif, un ruban auto-agrippant, des organes de fixation d'interverrouillage en forme de champignon et un aimant collant le dispositif de localisation de charge utile à la table d'automatisation.

9. Procédé d'apprentissage d'un robot (100, 400), le procédé comprenant :
la fourniture d'une charge utile (190) et d'un robot (100, 400) comprenant un organe mobile (140, 150) mobile par rapport à un axe vertical (134), d'un effecteur terminal (170) couplé à l'organe mobile (140, 150) et d'un moteur (144) opérationnel pour changer une position de l'organe mobile (140, 150) par rapport à l'axe vertical (134) ;
la mise en prise de l'effecteur terminal (170) avec la charge utile (190) ;
l'application à l'organe mobile (140, 150) d'une force motrice qui décale le poids de l'organe mobile (140, 150) ;
le déplacement du robot (100, 400) manuellement pour localiser la charge utile (190) à un emplacement de destination ; et
la charge utile (190) étant localisée à l'emplacement de destination, l'enregistrement d'informations de position relatives au robot, **caractérisé en ce que** le procédé comprend en outre :
la mesure d'informations de position concernant la position de l'organe mobile (140, 150),
le calcul, sur la base des informations de position et d'un modèle du robot, d'un couple cible dont le moteur (144) a besoin pour décaler le poids de l'organe mobile (140, 150),
la fourniture d'un signal de courant cible (TC) au moteur (144) afin que le moteur (144) applique le couple cible à l'organe mobile (140, 150).

10. Procédé selon la revendication précédente, comprenant au moins l'un parmi :
le robot comprend en plus un organe mobile supplémentaire et un moteur opérationnel pour déplacer l'organe supplémentaire par rapport à un axe horizontal (424, 434, 444), et le procédé comprend en plus le fait de couper l'alimentation du moteur avant de déplacer le robot manuellement ;
la charge utile est une charge utile d'apprentissage dimensionnée pour s'ajuster parfaitement avec l'emplacement de destination ;
l'effecteur terminal comprend un dispositif d'entrée utilisateur et l'enregistrement comprend l'enregistrement des informations de position en réponse à un ordre reçu du dispositif d'entrée utilisateur.

11. Procédé selon la revendication précédente, dans lequel :
l'organe mobile a une position de rotation variable ; et
l'alimentation comprend la variation du courant en fonction de la position de rotation de l'organe mobile.
